# EUROPÄISCHE PATENTSCHRIFT

(11) **EP 1 845 186 B1**
(45) Veröffentlichungstag und Bekanntmachung des Hinweises auf die Patenterteilung: **16.07.2014**
(21) Anmeldenummer: 07006844.0
(22) Anmeldetag: 02.04.2007
(51) Int. Cl.: D06M 23/12, A01N 25/28, D06M 16/00, B01J 13/02, A01N 25/34

(54) **Zur Insektenabwehr ausgerüstete Fasern und textile Flächengebilde**
Fibres and textile sheet prepared for repelling insects
Fibres équipées et structures plates textiles destinées à repousser les insectes

(30) Priorität: 11.04.2006 DE 102006016907
(43) Veröffentlichungstag der Anmeldung: 17.10.2007
(73) Patentinhaber: Fashion Chemicals GmbH & Co. KG, 82538 Geretsried (DE)
(72) Erfinder: Mathis, Raymond, 40627 Düsseldorf (DE); Sladek, Hans-Jürgen, 47800 Krefeld (DE)
(74) Vertreter: Herzog, Fiesser & Partner Patentanwälte PartG mbB

(56) Entgegenhaltungen:
- EP-A1- 1 359 247
- EP-B1- 0 511 258
- WO-A-2007/036710
- US-A1- 2002 039 593
- DATABASE WPI Week 199846 Derwent Publications Ltd., London, GB; AN 1998-537336 XP002443209 & JP 10 236903 A 8. September 1998 (1998-09-08)
- DATABASE WPI Week 199437 Derwent Publications Ltd., London, GB; AN 1994-300337 XP002443210 & JP 06 228882 A 16. August 1994 (1994-08-16)
- DATABASE WPI Week 199007 Derwent Publications Ltd., London, GB; AN 1990-049214 XP002443211 & JP 06 104922 B 21. Dezember 1994 (1994-12-21)

## Beschreibung

### Gebiet der Erfindung

Die Erfindung befindet sich auf dem Gebiet der Textilbehandlung und betrifft Fasern bzw. textile Flächengebilde die zur Abwehr und Schutz vor Insektenstichen ausgerüstet sind sowie die Verwendung spezieller Substanzgemische zur Textilausrüstung.

### Stand der Technik

Malaria ist eine lebensgefährliche Infektionskrankheit, die durch einzellige Organismen (Plasmodien) hervorgerufen und über die in den Tropen und Subtropen heimische Anophelesmücke übertragen wird. Die Plasmodien befallen die roten Blutkörperchen und vermehren sich dort. Sind die Erreger ausgereift, platzt das Blutkörperchen und setzt neue Plasmodien frei. Die Zerstörung der roten Blutkörperchen ruft einen Fieberschub hervor. Die neuen Plasmodien befallen wiederum rote Blutkörperchen und vermehren sich dort weiter. Auf diese Weise wird ein Kreislauf in Gang gesetzt, der ohne medikamentöse Behandlung in den allermeisten Fällen durch Kreislaufkollaps oder Lungenödeme zum Tode führt.

Nach einer Schätzung der Weltgesundheitsorganisation (WHO) erkranken weltweit jährlich etwa 110 Millionen Menschen, bis zu 2,7 Millionen sterben an der Infektion. Damit ist die Malaria nach der Tuberkulose die zweithäufigste Erkrankung in der Welt. Durch den verstärkten Reiseverkehr erkranken zunehmend auch Touristen speziell an der gefährlichen *Malaria tropica.* Auch hier rechnet man inzwischen jährlich mit etwa 12.000 Fällen in Europa.

Malaria kann immer dann erfolgreich behandelt werden, wenn sie früh genug erkannt wird. Auch eine Malariaprophylaxe ist möglich (insbesondere mit Hilfe von Chininverbindungen, die früher aus der Rinde des Chinabaumes gewonnen wurden), wenn gleich hier je nach Region die Gefahr einer Resistenz der Erreger zunimmt. Der beste Schutz gegen Malaria besteht indes darin, gar nicht erst gestochen zu werden. Da die dämmerungs- und nachtaktive Anophelesmücke in der Nähe von Feuchtgebieten und stehenden Gewässern lebt, ist gegen Ende der Regenzeit die Malariagefahr ist besonders hoch. In dieser Zeit bilden sich in den Tropen überall kleine Tümpel, in denen die Mücke ihre Eier ablegen kann. Danach vermehren sich die Mücken explosionsartig. Nun ist es aber nicht immer möglich, der Gefahr einer Malariaerkrankung dadurch zu begegnen, dass man sich in den betroffenen Gebieten ausschließlich im Hochland zur Trockenzeit bewegt. Ähnliches trifft auch für andere Krankheiten zu, die ausschließlich durch Insektenstiche übertragen werden, wie z.B. das West Nile Virus oder die aus La Réunion bekannte *Chikungunya*-Krankeit.

Es besteht vielmehr das Bedürfnis nach Mitteln, mit deren Hilfe zuverlässig verhindert oder zumindest deutlich reduziert werden kann, dass es zu Infektionen infolge von Insektenstichen kommt. Bekannte Insektenabwehrstoffe, auch als Repellents bezeichnet, sind Sesquiterpene, Diethyltoluamid (DEET), Ethyl Butylacetylaminopropionat (IR3535) oder Hydroxyethyl Isobutyl Piperidine Carboxylate (Bayrepel), das auch Bestandteil der bekannten "Autan"-Mischung ist. Besonders wirksam sind jedoch Stoffe aus der Gruppe der Pyrethroide, die dem Gift der Chrysantheme sehr ähnlich sind und daher auch ihren Namen bezogen haben. Aus dieser Gruppe ist wiederum als besonders wirksam die Verbindung *Permethrin* bekannt:

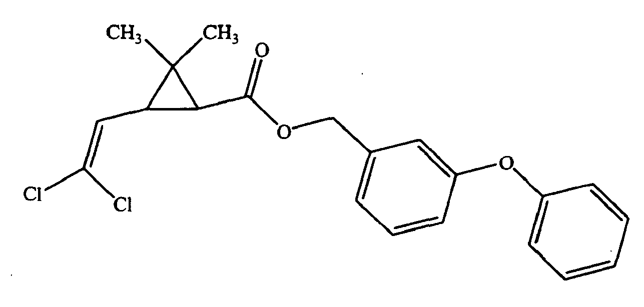

Eine Reihe dieser Repellents werden beispielsweise als Cremes, Lotionen oder Sprays direkt auf die Haut appliziert. Das Problem besteht jedoch darin, dass sie leicht durch Schweiß abgewaschen oder zersetzt werden und damit schnell ihre Wirksamkeit verlieren und nur solche Produkte überhaupt für diese Anwendung in Betracht kommen, die ausreichend hautverträglich und toxikologisch unbedenklich sind. Die besonders wirksamen natürlichen Chrysanthemen-Extrakte wie z.B. das Pyrethrum scheiden aus diesen Gründen daher regelmäßig aus, da sie durch Wasser hydrolysiert und durch Sonnenlicht zersetzt werden.

Eine Alternative zur topischen Applikation besteht darin, Textilien mit Insektenabwehrstoffen auszurüsten. Das Aufbringen der Repellents erfolgt dabei in der Regel durch Imprägnieren. In der Praxis erweist sich das aber als wenig effizient. Beim Aufbringen auf Strumpfhosen beispielsweise ist die Wirkstoffmenge wegen des weitmaschigen Gewebes so gering, dass die Abwehrwirkung per se schon unzureichend ist. Bei dichtmaschigeren Textilien, also Hosen, Hemden, T-Shirts, aber auch beispielsweise Zeltplanen, Moskito- und Tarnnetzen, beobachtet man, dass der Wirkstoff innerhalb kürzester Zeit ausgewaschen wird oder erst gar nicht für die Abwehr der Insekten zur Verfügung steht, weil er von den Fasern aufgesogen wird. Ein weiterer Nachteil besteht ferner darin, dass die direkte Applikation auf die Fasern oder Textilien eine hohe Einsatzmenge an Wirkstoffen erfordert, was besondere Anforderungen an die Arbeitssicherheit erforderlich macht. Beispiele für solche Applikationen sind aus JP 10236903 A bekannt.

In diesem Zusammenhang sei auf die Patentschrift US 5,229,122 (Burroughs) hingewiesen, aus der Gemische aus verkapselten und nicht-verkapselten Pyrethroidwirkstoffen bekannt sind, die zur Ausrüstung von Holz, Werkstoffen und Gebäuden verwendet werden. Gegenstand der EP 1359247 B1 (Cognis) sind textile Flächengebilde, die mit mikroverkapselten kosmetischen Wirkstoffen und Bindern ausgerüstet werden.

Die komplexe Aufgabe der vorliegenden Erfindung hat nun darin bestanden, Insektenabwehrstoffe in einer solchen Form auf Textilien zu applizieren, dass die Repellents zunächst einmal überhaupt für die Insektenabwehr zur Verfügung stehen, d.h. nicht von den Fasern absorbiert werden und zum anderen über einen hinreichend langen Zeitraum wirksam bleiben, d.h. eine ausreichend hohe Zahl von Wäschen überstehen ohne ausgewaschen zu werden. Gleichzeitig sollte die Applikationsform sicherstellen, dass die Wirkstoffe vor chemischer oder physikalischer Zersetzung geschützt sind. Schließlich sollte die Applikationsform gewährleisten, dass eine ausreichende Resistenz gegenüber organischen Lösemitteln, wie z.B. Hexan besteht, in denen insbesondere Pyrethroide leicht löslich sind.

### Beschreibung der Erfindung

Gegenstand der Erfindung sind Fasern und textile Flächengebilde, die sich dadurch auszeichnen, dass sie mit Mischungen aus
(a) mikroverkapselten Insektenabwehrstoffen, und
(b) Bindemitteln
ausgerüstet sind, mit der Maßgabe, dass sie mit Mikrokapseln mit mittleren Durchmessern im Bereich von 0,0001 bis 0,5 mm, bestehend aus einer Hüllmembran und einer die Wirkstoffe enthaltenden Matrix ausgerüstet sind, welche dadurch erhältlich sind, dass man
(c1) aus anionischen Polymeren und Wirkstoffen eine Matrix zubereitet,
(c2) die Matrix in einer Ölphase dispergiert und
(c3) die dispergierte Matrix mit Melamin-Formaldehydharz verkapselt, wobei man als anionisches Polymer ein Copolymer aus Vinylmethylether und Maleinsäureanhydrid einsetzt.

Überraschenderweise wurde gefunden, dass die Ausrüstung von Fasern und Textilien mit mikroverkapselten Insektenabwehrstoffen unter Zuhilfenahme von Bindemitteln dazu führt, dass die Stoffe im Praxistest einen ausgezeichneten Schutz gegen Insektenstiche bieten. Die Mik-haften fest auf den Fasern, wodurch im Vergleich mit dem Stand der Technik zwei Dinge gleichzeitig erreicht werden: zum einen steht der Wirkstoff zur Insektenabwehr tatsächlich auch zur Verfügung und zum anderen ist die Verkapselung so robust, dass sie zwar eine ganze Reihe von Waschzyklen übersteht, den Wirkstoff aber gezielt und verzögert freisetzt. Ein weiterer Vorteil besteht darin, dass die Mikrokapseln die gleiche Größenordnung wie der Durchmesser der Stechorgane der Insekten aufweisen. Dadurch ist sicher gestellt, dass bei direktem Kontakt zwischen Stechorgan und Textilien tatsächlich auch eine hinreichend hohe Wahrscheinlichkeit besteht, dass die Kapseln getroffen werden, den Wirkstoff dann konzentriert freisetzen und so das Insekt abtöten. Durch die Verkapselung wird ferner sichergestellt, dass die empfindlichen Wirkstoffe nicht infolge chemischer oder physikalischer Prozesse abgebaut werden und somit ihre Wirksamkeit verlieren. Die Applikation der Kapseln ist einfach und insbesondere unter Berücksichtigung arbeitstechnischer Gesichtspunkte ungefährlich.

### Insektenabwehrstoffe

Als Insektenabwehrstoffe, die im Sinne der vorliegenden Erfindung in Form von Mikrokapseln zur Ausrüstung der Fasern und Textilien verwendet werden können, kommen beispielsweise Sesquiterpene, Diethyltoluamid (DEET), Ethyl Butylacetylaminopropionat (IR3535), Hydroxyethyl Isobutyl Piperidine Carboxylate und insbesondere Pyrethroide sowie deren Gemische in Betracht. Typische Beispiele für Pyrethroide sind 5-Benzyl-3-furylmethyl (+)-cis-(1R,3S,E) 2,2-dimethyl-3-(2-oxo-2,3,4,5-tetrahyfrothiophenylidenmethyl)cyclopropancarboxylat, 6-Chloropiperonyl 2,2-dimethyl-3-(2-methylpropenyl)cyclopropancarboxylat, Acrinathrin, Allethrin, Bifentrin, Bioresmethrin, Cismethrin, Cyclethrin, Cycloprothrin, Cyfluthrin, Cyhalothrin, Cypermethrin, Cyphenotrin, Deltamethrin, Dimethrin, Empenthrin, Esfenvalerat, Fenfluthrin, Fenpropathrin, Fenvalerat, Flucythrinat, Flumethrin, Fluvalinat, Furethrin, Halfenprox, Imiprothrin, Methyl cis/trans-3-(2,2-dichlorovinyl)-2,2-dimethylcyclopropan-1-carboxylat, und insbesondere Permethrin sowie deren Gemische.

### Mikrokapseln

Unter den Begriffen "Mikrokapsel" oder "Nanokapsel" werden vom Fachmann sphärische Aggregate mit einem Durchmesser im Bereich von etwa 0,0001 bis etwa 0,5 und vorzugsweise 0,001 bis 0,01 mm (also zwischen 1 und 10 µ) verstanden, die mindestens einen festen oder flüssigen Kern enthalten, der von mindestens einer kontinuierlichen Hülle umschlossen ist. Genauer gesagt handelt es sich um mit filmbildenden Polymeren umhüllte feindisperse flüssige oder feste Phasen, bei deren Herstellung sich die Polymere nach Emulgierung und Koazervation oder Grenzflächenpolymerisation auf dem einzuhüllenden Material niederschlagen. Nach einem anderen Verfahren werden geschmolzene Wachse in einer Matrix aufgenommen ("microsponge"), die als Mikropartikel zusätzlich mit filmbildenden Polymeren umhüllt sein können. Nach einem dritten Verfahren werden Partikel abwechselnd mit Polyelektrolyten unterschiedlicher Ladung beschichtet ("layer-by-layer"-Verfahren). Die mikroskopisch kleinen Kapseln lassen sich wie Pulver trocknen. Neben einkernigen Mikrokapseln sind auch mehrkernige Aggregate, auch Mikrosphären genannt, bekannt, die zwei oder mehr Kerne im kontinuierlichen Hüllmaterial verteilt enthalten. Ein- oder mehrkernige Mikrokapseln können zudem von einer zusätzlichen zweiten, dritten etc. Hülle umschlossen sein. Die Hülle kann aus natürlichen, halbsynthetischen oder synthetischen Materialien bestehen. Natürlich Hüllmaterialien sind beispielsweise Gummi Arabicum, Agar-Agar, Agarose, Maltodextrine, Alginsäure bzw. ihre Salze, z.B. Natrium- oder Calciumalginat, Fette und Fettsäuren, Cetylalkohol, Collagen, Chitosan, Lecithine, Gelatine, Albumin, Schellack, Polysaccharide, wie Stärke oder Dextran, Polypeptide, Proteinhydrolysate, Sucrose und Wachse. Halbsynthetische Hüllmaterialien sind unter anderem chemisch modifizierte Cellulosen, insbesondere Celluloseester und -ether, z.B. Celluloseacetat, Ethylcellulose, Hydroxypropylcellulose, Hydroxypropylmethylcellulose und Carboxymethylcellulose, sowie Stärkederivate, insbesondere Stärkeether und -ester. Synthetische Hüllmaterialien sind beispielsweise Polymere wie Polyacrylate, Polyamide, Polyvinylalkohol oder Polyvinylpyrrolidon.

Beispiele für Mikrokapseln des Stands der Technik sind folgende Handelsprodukte (in Klammern angegeben ist jeweils das Hüllmaterial) : *Hallcrest Microcapsules* (Gelatine, Gummi Arabicum), *Coletica Thalaspheres* (maritimes Collagen), *Lipotec Millicapseln* (Alginsäure, Agar-Agar), *Induchem Unispheres* (Lactose, mikrokristalline Cellulose, Hydroxypropylmethylcellulose); *Unicerin C30* (Lactose, mikrokristalline Cellulose, Hydroxypropylmethylcellulose), *Kobo Glycospheres* (modifizierte Stärke, Fettsäureester, Phospholipide), *Softspheres* (modifiziertes Agar-Agar) und *Kuhs Probiol Nanospheres* (Phospholipide) sowie *Primaspheres* und *Primasponges* (Chitosan, Alginate) und *Primasys* (Phospholipide).

Chitosanmikrokapseln und Verfahren zu ihrer Herstellung sind Gegenstand früherer Patenanmeldungen der Patentanmelderin **[**WO 01/01926**,** WO 01/01927**,** WO 01/01928**,** WO 01/01929**].** Mikrokapseln mit mittleren Durchmessern im Bereich von 0,0001 bis 0,5, vorzugsweise 0,0005 bis 0,05 und insbesondere 0,001 bis 0,01 mm, bestehend aus einer Hüllmembran und einer die Wirkstoffe enthaltenden Matrix, können beispielsweise erhalten werden, indem man
(a1) aus Gelbildnern, Chitosanen und Wirkstoffen eine Matrix zubereitet,
(a2) gegebenenfalls die Matrix in einer Ölphase dispergiert,
(a3) die gegebenenfalls dispergierte Matrix mit wässrigen Lösungen anionischer Polymere behandelt und gegebenenfalls dabei die Ölphase entfernt;
oder
(b1) aus Gelbildnern, anionischen Polymeren und Wirkstoffen eine Matrix zubereitet,
(b2) gegebenenfalls die Matrix in einer Ölphase dispergiert,
(b3) die gegebenenfalls dispergierte Matrix mit wässrigen Chitosanlösungen behandelt und gegebenenfalls dabei die Ölphase entfernt;
oder
(c1) aus anionischen Polymeren und Wirkstoffen eine Matrix zubereitet,
(c2) die Matrix in einer Ölphase dispergiert und
(c3) die dispergierte Matrix mit Melamin-Formaldehydharzen oder Maleinsäureanhydrid verkapselt;
oder
(d1) die Wirkstoffe mit Ölkörpern in Gegenwart von Emulgatoren zu O/W-Emulsionen verarbeitet,
(d2) die so erhaltenen Emulsionen mit wässrigen Lösungen anionischer Polymere behandelt,
(d3) die so erhaltene Matrix mit wässrigen Chitosanlösungen in Kontakt bringt und
(d4) die so erhaltenen Verkapselungsprodukte von der wässrigen Phase abtrennt;
oder
den Wirkstoff abwechselnd mit Schichten aus unterschiedlich geladenen Polyelektrolyten einhüllt (layer-by-layer-Technologie).
- Gelbildner
   Im Sinne der Erfindung werden als Gelbildner vorzugsweise solche Stoffe in Betracht gezogen, welche die Eigenschaft zeigen in wässriger Lösung bei Temperaturen oberhalb von 40 °C Gele zu bilden. Typische Beispiele hierfür sind Heteropolysaccharide und Proteine. Als thermogelierende Heteropolysaccharide kommen vorzugsweise Agarosen in Frage, welche in Form des aus Rotalgen zu gewinnenden Agar-Agar auch zusammen mit bis zu 30 Gew.-% nicht-gelbildenden Agaropektinen vorliegen können. Hauptbestandteil der Agarosen sind lineare Polysaccharide aus D-Galaktose und 3,6-Anhydro-L-galaktose, die alternierend β-1,3- und β-1,4-glykosidisch verknüpft sind. Die Heteropolysaccharide besitzen vorzugsweise ein Molekulargewicht im Bereich von 110.000 bis 160.000 und sind sowohl farb- als auch geschmacklos. Als Alternativen kommen Pektine, Xanthane (auch Xanthan Gum) sowie deren Mischungen in Frage. Es sind weiterhin solche Typen bevorzugt, die noch in 1-Gew.-%iger wässriger Lösung Gele bilden, die nicht unterhalb von 80 °C schmelzen und sich bereits oberhalb von 40 °C wieder verfestigen. Aus der Gruppe der thermogelierenden Proteine seien exemplarisch die verschiedenen Gelatine-Typen genannt.
- Kationische Polymere
   Geeignete kationische Polymere sind beispielsweise kationische Cellulosederivate, wie z.B. eine quaternierte Hydroxyethylcellulose, die unter der Bezeichnung Polymer JR 400® von Amerchol erhältlich ist, kationische Stärke, Copolymere von Diallylammoniumsalzen und Acrylamiden, quaternierte Vinylpyrrolidon/Vinylimidazol-Polymere, wie z.B. Luviquat® (BASF), Kondensationsprodukte von Polyglycolen und Aminen, quaternierte Kollagenpolypeptide, wie beispielsweise Lauryldimonium Hydroxypropyl Hydrolyzed Collagen (Lamequat®L/Grünau), quaternierte Weizenpolypeptide, Polyethylenimin, kationische Siliconpolymere, wie z.B. Amodimethicone, Copolymere der Adipinsäure und Dimethylaminohydroxypropyldiethylentriamin (Cartaretine®/Sandoz), Copolymere der Acrylsäure mit Dimethyldiallylammoniumchlorid (Merquat® 550/Chemviron), Polyaminopolyamide sowie deren vernetzte wasserlöslichen Polymere, kationische Chitinderivate wie beispielsweise quaterniertes Chitosan, gegebenenfalls mikrokristallin verteilt, Kondensationsprodukte aus Dihalogenalkylen, wie z.B. Dibrombutan mit Bisdialkylaminen, wie z.B. Bis-Dimethylamino-1,3-propan, kationischer Guar-Gum, wie z.B. Jaguar® CBS, Jaguar® C-17, Jaguar® C-16 der Firma Celanese, quaternierte Ammoniumsalz-Polymere, wie z.B. Mirapol® A-15, Mirapol® AD-1, Mirapol® AZ-1 der Firma Miranol.
   Vorzugsweise wird als Verkapselungsmaterial Chitosan eingesetzt. Chitosane stellen Biopolymere dar und werden zur Gruppe der Hydrokolloide gezählt. Chemisch betrachtet handelt es sich um partiell deacetylierte Chitine unterschiedlichen Molekulargewichtes, die den folgenden - idealisierten - Monomerbaustein enthalten: 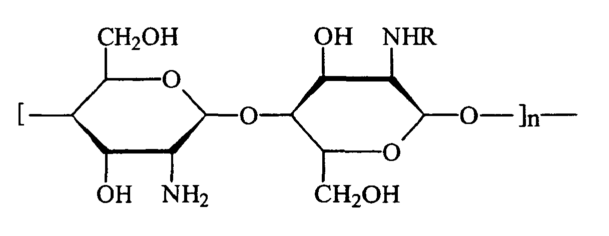 Im Gegensatz zu den meisten Hydrokolloiden, die im Bereich biologischer pH-Werte negativ geladen sind, stellen Chitosane unter diesen Bedingungen kationische Biopolymere dar. Die positiv geladenen Chitosane können mit entgegengesetzt geladenen Oberflächen in Wechselwirkung treten und werden daher in kosmetischen Haar- und Körperpflegemitteln sowie pharmazeutischen Zubereitungen eingesetzt. Zur Herstellung der Chitosane geht man von Chitin, vorzugsweise den Schalenresten von Krustentieren aus, die als billige Rohstoffe in großen Mengen zur Verfügung stehen. Das Chitin wird dabei in einem Verfahren, das erstmals von Hackmann et al. beschrieben worden ist, üblicherweise zunächst durch Zusatz von Basen deproteiniert, durch Zugabe von Mineralsäuren demineralisiert und schließlich durch Zugabe von starken Basen deacetyliert, wobei die Molekulargewichte über ein breites Spektrum verteilt sein können. Vorzugsweise werden solche Typen eingesetzt, wie die ein durchschnittliches Molekulargewicht von 10.000 bis 500.000 bzw. 800.000 bis 1.200.000 Dalton aufweisen und/oder eine Viskosität nach Brookfield (1 Gew.-%ig in Glycolsäure) unterhalb von 5000 mPas, einen Deacetylierungsgrad im Bereich von 80 bis 88 % und einem Aschegehalt von weniger als 0,3 Gew.-% besitzen. Aus Gründen der besseren Wasserlöslichkeit werden die Chitosane in der Regel in Form ihrer Salze, vorzugsweise als Glycolate eingesetzt.
- Ölphase
   Die Matrix kann vor der Bildung der Membran optional in einer Ölphase dispergiert werden. Als Öle kommen für diesen Zweck beispielsweise Guerbetalkohole auf Basis von Fettalkoholen mit 6 bis 18, vorzugsweise 8 bis 10 Kohlenstoffatomen, Ester von linearen C₆-C₂₂-Fettsäuren mit linearen C₆-C₂₂-Fettalkoholen, Ester von verzweigten C₆-C₁₃-Carbonsäuren mit linearen C₆-C₂₂-Fettalkoholen, wie z.B. Myristylmyristat, Myristylpalmitat, Myristylstearat, Myristylisostearat, Myristyloleat, Myristylbehenat, Myristylerucat, Cetylmyristat, Cetylpalmitat, Cetylstearat, Cetylisostearat, Cetyloleat, Cetylbehenat, Cetylerucat, Stearylmyristat, Stearylpalmitat, Stearylstearat, Stearylisostearat, Stearyloleat, Stearylbehenat, Stearylerucat, Isostearylmyristat, Isostearylpalmitat, Isostearylstearat, Isostearylisostearat, Isostearyloleat, Isostearylbehenat, Isostearyloleat, Oleylmyristat, Oleylpalmitat, Oleylstearat, Oleylisostearat, Oleyloleat, Oleylbehenat, Oleylerucat, Behenylmyristat, Behenylpalmitat, Behenylstearat, Behenylisostearat, Behenyloleat, Behenylbehenat, Behenylerucat, Erucylmyristat, Erucylpalmitat, Erucylstearat, Erucylisostearat, Erucyloleat, Erucylbehenat und Erucylerucat. Daneben eignen sich Ester von linearen C₆-C₂₂-Fettsäuren mit verzweigten Alkoholen, insbesondere 2-Ethylhexanol, Ester von Hydroxycarbonsäuren mit linearen oder verzweigten C₆-C₂₂-Fettalkoholen, insbesondere Dioctyl Malate, Ester von linearen und/oder verzweigten Fettsäuren mit mehrwertigen Alkoholen (wie z.B. Propylenglycol, Dimerdiol oder Trimertriol) und/oder Guerbetalkoholen, Triglyceride auf Basis C₆-C₁₀-Fettsäuren, flüssige Mono-/Di-/Triglyceridmischungen auf Basis von C₆-C₁₈-Fettsäuren, Ester von C₆-C₂₂-Fettalkoholen und/oder Guerbetalkoholen mit aromatischen Carbonsäuren, insbesondere Benzoesäure, Ester von C₂-C₁₂-Dicarbonsäuren mit linearen oder verzweigten Alkoholen mit 1 bis 22 Kohlenstoffatomen oder Polyolen mit 2 bis 10 Kohlenstoffatomen und 2 bis 6 Hydroxylgruppen, pflanzliche Öle, verzweigte primäre Alkohole, substituierte Cyclohexane, lineare und verzweigte C₆-C₂₂-Fettalkoholcarbonate, Guerbetcarbonate, Ester der Benzoesäure mit linearen und/oder verzweigten C₆-C₂₂-Alkoholen (z.B. Finsolv® TN), lineare oder verzweigte, symmetrische oder unsymmetrische Dialkylether mit 6 bis 22 Kohlenstoffatomen pro Alkylgruppe, Ringöffnungsprodukte von epoxidierten Fettsäureestern mit Polyolen, Siliconöle und/oder aliphatische bzw. naphthenische Kohlenwasserstoffe, wie z.B. wie Squalan, Squalen oder Dialkylcyclohexane in Betracht.
   Anionpolymere
   Die anionischen Polymere haben die Aufgabe, mit den Chitosanen Membranen zu bilden. Für diesen Zweck eignen sich vorzugsweise Salze der Alginsäure. Bei der Alginsäure handelt es sich um ein Gemisch carboxylgruppenhaltiger Polysaccharide mit folgendem idealisierten Monomerbaustein: 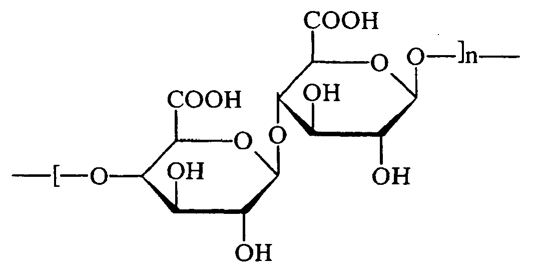 Das durchschnittliche Molekulargewicht der Alginsäuren bzw. der Alginate liegt im Bereich von 150.000 bis 250.000. Dabei sind als Salze der Alginsäure sowohl deren vollständige als auch deren partiellen Neutralisationsprodukte zu verstehen, insbesondere die Alkalisalze und hierunter vorzugsweise das Natriumalginat ("Algin") sowie die Ammonium- und Erdalkalisalze. besonders bevorzugt sind Mischalginate, wie z.B. Natrium/Magnesium- oder Natrium/Calciumalginate. In einer alternativen Ausführungsform der Erfindung kommen für diesen Zweck jedoch auch anionische Chitosanderivate, wie z.B. Carboxylierungs- und vor allem Succinylierungsprodukte in Frage. Alternativ kommen auch Poly(meth)acrylate mit durchschnittlichen Molekulargewichten im Bereich von 5.000 bis 50.000 Dalton sowie die verschiedenen Carboxymethylcellulosen in Frage. Anstelle der anionischen Polymeren können für die Ausbildung der Hüllmembran auch anionische Tenside oder niedermolekulare anorganische Salze, wie beispielsweise Pyrophosphate eingesetzt werden.
   Werden die anionischen Polymere benötigt, um mit Melamin-Formaldehydharzen zu kondensieren, dann ist der Einsatz von Polyvinylmethylether (PVM) empfehlenswert. Wird Polyvinylmnethacrylat als anionisches Polymer verwendet, kann die Kapselbildung auch durch Zugabe von Maleinsäureanhydrid erfolgen. Solche Kapseln vom PVM/MA-Typ sind auch in Summe bevorzugt, da sie äußerst robust und gegen Lösemittel wie Hexan resistent sind und mit Bindemitteln, vorzugsweise Siliconen, Polyurethanen und Ethylvinylacetaten, besonders dauerhaft an den Fasern und Textilien haften, wodurch ein optimierter Schutz gewährt wird.
- Emulgatoren
   Als Emulgatoren kommen anionische, amphotere, kationische oder vorzugsweise nichtionische oberflächenaktive Verbindungen aus mindestens einer der folgenden Gruppen in Frage:
   o Anlagerungsprodukte von 2 bis 30 Mol Ethylenoxid und/ oder 0 bis 5 Mol Propylenoxid an lineare Fettalkohole mit 8 bis 22 C-Atomen, an Fettsäuren mit 12 bis 22 C-Atomen, an Alkylphenole mit 8 bis 15 C-Atomen in der Alkylgruppe sowie Alkylamine mit 8 bis 22 Kohlenstoffatomen im Alkylrest;
   o Alkyl- und/oder Alkenyloligoglykoside mit 8 bis 22 Kohlenstoffatomen im Alk(en)ylrest und deren ethoxylierte Analoga;
   o Anlagerungsprodukte von 1 bis 15 Mol Ethylenoxid an Ricinusöl und/oder gehärtetes Ricinusöl;
   o Anlagerungsprodukte von 15 bis 60 Mol Ethylenoxid an Ricinusöl und/oder gehärtetes Ricinusöl;
   o Partialester von Glycerin und/oder Sorbitan mit ungesättigten, linearen oder gesättigten, verzweigten Fettsäuren mit 12 bis 22 Kohlenstoffatomen und/oder Hydroxycarbonsäuren mit 3 bis 18 Kohlenstoffatomen sowie deren Addukte mit 1 bis 30 Mol Ethylenoxid;
   o Partialester von Polyglycerin (durchschnittlicher Eigenkondensationsgrad 2 bis 8), Polyethylenglycol (Molekulargewicht 400 bis 5000), Trimethylolpropan, Pentaerythrit, Zuckeralkoholen (z.B. Sorbit), Alkylglucosiden (z.B. Methylglucosid, Butylglucosid, Laurylglucosid) sowie Polyglucosiden (z.B. Cellulose) mit gesättigten und/oder ungesättigten, linearen oder verzweigten Fettsäuren mit 12 bis 22 Kohlenstoffatomen und/oder Hydroxycarbonsäuren mit 3 bis 18 Kohlenstoffatomen sowie deren Addukte mit 1 bis 30 Mol Ethylenoxid;
   o Mischester aus Pentaerythrit, Fettsäuren, Citronensäure und Fettalkohol und/oder Mischester von Fettsäuren mit 6 bis 22 Kohlenstoffatomen, Methylglucose und Polyolen, vorzugsweise Glycerin oder Polyglycerin.
   o Mono-, Di- und Trialkylphosphate sowie Mono-, Di- und/oder Tri-PEGalkylphosphate und deren Salze;
   o Wollwachsalkohole;
   o Polysiloxan-Polyalkyl-Polyether-Copolymere bzw. entsprechende Derivate;
   o Block-Copolymere z.B. Polyethylenglycol-30 Dipolyhydroxystearate;
   o Polymeremulgatoren, z.B. Pemulen-Typen (TR-1,TR-2) von Goodrich;
   o Polyalkylenglycole,
   o Glycerincarbonat,
   o aliphatische Fettsäuren mit 12 bis 22 Kohlenstoffatomen, wie beispielsweise Palmitinsäure, Stearinsäure oder Behensäure, sowie Dicarbonsäuren mit 12 bis 22 Kohlenstoffatomen, wie beispielsweise Azelainsäure oder Sebacinsäure, sowie
   o Betaine wie die N-Alkyl-N,N-dimethylammoniumglycinate, beispielsweise das Kokosalkyldimethylammoniumglycinat, N-Acylaminopropyl-N,N-dimethylammoniumglycinate, beispielsweise das Kokosacylaminopropyldimethylammoniumglycinat, und 2-Alkyl-3-carboxylmethyl-3-hydroxyethylimidazoline mit jeweils 8 bis 18 C-Atomen in der Alkyl- oder Acylgruppe sowie das Kokosacylaminoethylhydroxyethylcarboxymethylglycinat.

### Herstellverfahren Mikrokapseln

Zur Herstellung der Mikrokapseln stellt man üblicherweise eine 1 bis 10, vorzugsweise 2 bis 5 Gew.-%ige wässrige Lösung des Gelbildners, vorzugsweise des Agar-Agars her und erhitzt diese unter Rückfluss. In der Siedehitze, vorzugsweise bei 80 bis 100°C, wird eine zweite wässrige Lösung zugegeben, welche das Kationpolymer, vorzugsweise das Chitosan in Mengen von 0,1 bis 2, vorzugsweise 0,25 bis 0,5 Gew.-% und den Wirkstoffen in Mengen von 0,1 bis 25 und insbesondere 0,25 bis 10 Gew.-% enthält; diese Mischung wird als Matrix bezeichnet. Die Beladung der Mikrokapseln mit Wirkstoffen kann daher ebenfalls 0,1 bis 25 Gew.-% bezogen auf das Kapselgewicht betragen. Falls gewünscht, können zu diesem Zeitpunkt zur Viskositätseinstellung auch wasserunlösliche Bestandteile, beispielsweise anorganische Pigmente zugegeben werden, wobei man diese in der Regel in Form von wässrigen oder wässrig/alkoholischen Dispersionen zusetzt. Zur Emulgierung bzw. Dispergierung der Wirkstoffe kann es ferner von Nutzen sein, der Matrix Emulgatoren und/oder Lösungsvermittler hinzuzugeben. Nach der Herstellung der Matrix aus Gelbildner, Kationpolymer und Wirkstoffen kann die Matrix optional in einer Ölphase unter starker Scherung sehr fein dispergiert werden, um bei der nachfolgenden Verkapselung möglichst kleine Teilchen herzustellen. Dabei hat es sich als besonders vorteilhaft erwiesen, die Matrix auf Temperaturen im Bereich von 40 bis 60 °C zu erwärmen, während man die Ölphase auf 10 bis 20 °C kühlt. Im letzten, nun wieder obligatorischen Schritt erfolgt dann die eigentliche Verkapselung, d.h. die Ausbildung der Hüllmembran durch Inkontaktbringen des Kationpolymers in der Matrix mit den anionischen Polymeren. Hierzu empfiehlt es sich, die gegebenenfalls in der Ölphase dispergierte Matrix bei einer Temperatur im Bereich von 40 bis 100, vorzugsweise 50 bis 60 °C mit einer wässrigen, etwa 1 bis 50 und vorzugsweise 10 bis 15 Gew.-%ige wässrigen Lösung des Anionpolymers zu behandeln und dabei - falls erforderlich - gleichzeitig oder nachträglich die Ölphase zu entfernen. Die dabei resultierenden wässrigen Zubereitungen weisen in der Regel einen Mikrokapselgehalt im Bereich von 1 bis 10 Gew.-% auf. In manchen Fällen kann es dabei von Vorteil sein, wenn die Lösung der Polymeren weitere Inhaltsstoffe, beispielsweise Emulgatoren oder Konservierungsmittel enthält. Nach Filtration werden Mikrokapseln erhalten, welche im Mittel einen Durchmesser im Bereich von vorzugsweise etwa 0,001 bis 1 mm aufweisen. Es empfiehlt sich, die Kapseln zu sieben, um eine möglichst gleichmäßige Größenverteilung sicherzustellen. Die so erhaltenen Mikrokapseln können im herstellungsbedingten Rahmen eine beliebige Form aufweisen, sie sind jedoch bevorzugt näherungsweise kugelförmig. Alternativ kann man die Anionpolymere auch zur Herstellung der Matrix einsetzen und die Verkapselung mit den Kationpolymeren, speziell den Chitosanen durchführen. Alternativ kann die Verkapselung auch unter ausschließlicher Verwendung von Kationpolymeren erfolgen, wobei man sich deren Eigenschaft zu Nutze macht, bei pH-Werten oberhalb des pKs-Wertes zu koagulieren.
In einem zweiten alternativen Verfahren werden die Wirkstoffe mit den anionischen Polymeren vermischt und die so erhaltene Matrix in einem Ölkörper dispergiert. Die Dispersion wird anschließend mit Melamin-Formaldehydharz versetzt und verkapselt. Alternativ können die Wirkstoffe auch in der Ölphase gelöst und diese dann mit den Anionpolymeren versetzt werden, bevor die Verkapselung durchgeführt wird.

In einem weiteren alternativen Verfahren wird zur Herstellung der erfindungsgemäßen Mikrokapseln wird zunächst eine O/W-Emulsion zubereitet, welche neben dem Ölkörper, Wasser und den Wirkstoffen eine wirksame Menge Emulgator enthält. Zur Herstellung der Matrix wird diese Zubereitung unter starkem Rühren mit einer entsprechenden Menge einer wässrigen Anionpolymerlösung versetzt. Die Membranbildung erfolgt durch Zugabe der Chitosanlösung. Der gesamte Vorgang findet vorzugsweise im schwach sauren Bereich bei pH = 3 bis 4 statt. Falls erforderlich erfolgt die pH-Einstellung durch Zugabe von Mineralsäure. Nach der Membranbildung wird der pH-Wert auf 5 bis 6 angehoben, beispielsweise durch Zugabe von Triethanolamin oder einer anderen Base. Hierbei kommt es zu einem Anstieg der Viskosität, die durch Zugabe von weiteren Verdickungsmitteln, wie z.B. Polysacchariden, insbesondere Xanthan-Gum, Guar-Guar, Agar-Agar, Alginaten und Tylosen, Carboxymethylcellulose und Hydroxyethylcellulose, höhermolekularen Polyethylenglycolmono- und -diestern von Fettsäuren, Polyacrylaten, Polyacrylamiden und dergleichen noch unterstützt werden kann. Abschließend werden die Mikrokapseln von der wässrigen Phase beispielsweise durch Dekantieren, Filtrieren oder Zentrifugieren abgetrennt.

In einem weiteren alternativen Verfahren erfolgt die Kapselbildung durch Tröpfchenbildung und Stabilisierung mit einem Copolymer aus Vinylmethylether und Maleinsäureanhydrid, gefolgt mit der Vernetzung mit einem Melamin-Formaldehydharz. Entsprechende Verfahren sind aus dem Stand der Technik, beispielsweise aus den Druckschrift DE 3512565 A1 (BASF) sowie US 4,089,802 (NRC Corp.) bekannt.

In einem letzten alternativen Verfahren erfolgt die Bildung der Mikrokapseln um einen vorzugsweise festen, beispielsweise kristallinen Kern, indem dieser schichtweise mit entgegengesetzt geladenen Polyelektrolyten eingehüllt wird. In diesem Zusammenhang sei auf das Europäische Patent EP 1064088 B1 (Max-Planck Gesellschaft) verwiesen.

### Bindemittel

Die im Sinne der Erfindung in Betracht kommenden polymeren, filmbildenden Bindemittel, die die Komponente (b) bilden, können ausgewählt sein aus der Gruppe, die gebildet wird von
- Polyurethanen
- Polyethylvinylacetaten,
- polymeren Melaminverbindungen,
- polymeren Glyoxalverbindungen,
- polymeren Siliconverbindungen,
- epichlorhydrinvernetzten Polyamidoaminen,
- Poly(meth)acrylaten und
- polymeren Fluorkohlenwasserstoffen.
- Polyurethane und Polyvinylacetate
   Geeignete Polyurethane (PU) und Polyethylvinylacetate (EVA) stellen die im Handel erhältlichen Produkte aus der Reihe Stabiflex® bzw. Stabicryl® der Cognis Deutschland GmbH & Co. KG.
- Polymere Melaminverbindungen
   Melamin (synonym: 2,4,6-triamino-1,3,5-triazin) entsteht üblicherweise durch Trimerisierung von Dicyandiamid oder durch Cyclisierung von Harnstoff unter Abspaltung von Kohlendioxid und Ammoniak.Im Sinne der Erfindung werden unter Melaminen oligomere oder polymere Kondensationsprodukte des Melamins mit Formaldehyd, Harnstoff, Phenol oder deren Gemischen verstanden.
- Polymere Glyoxalverbindungen
   Glyoxal (synonym: Oxaldehyd, Ethandial) entsteht bei der Dampfphasenoxidation von Ethylenglycol mit Luft in Gegenwart von Silberkatalysatoren. Im Sinne der Erfindung werden unter Glyoxalen die Eigenkondensationsprodukte des Glyoxals ("Polyglyoxale") verstanden.
- Polymere Siliconverbindungen
   Geeignete Siliconverbindungen sind beispielsweise Dimethylpolysiloxane, Methylphenylpolysiloxane, cyclische Silicone sowie amino-, fettsäure-, alkohol-, polyether-, epoxy-, fluor-, glykosid- und/oder alkylmodifizierte Siliconverbindungen, die bei Raumtemperatur vorzugsweise fest oder harzförmig vorliegen. Weiterhin geeignet sind Simethicone, bei denen es sich um Mischungen aus Dimethiconen mit einer durchschnittlichen Kettenlänge von 200 bis 300 Dimethylsiloxan-Einheiten und hydrierten Silicaten handelt. Besonders bevorzugt ist der Einsatz von Aminosiloxanen, z.B Cognis 3001-A der Cognis Deutschland GmbH & Co. KG. Deren weiteren Vernetzung mit H-Siloxanen, z.B. Cognis 3002-A der Cognis Deutschland GmbH & Co. KG. kann die Leistung als Bindemittel noch weiter steigern.
- Epichlorhydrinvernetzte Polyamidoamine
   Epichlorhydrinvernetzte Polyamidoamine, die auch als *"Fibrabones"* oder *"Wet strength resins"* bezeichnet werden, sind aus der Textil- und Papiertechnologie hinreichend bekannt. Zu ihrer Herstellung geht man vorzugsweise von zwei Verfahren aus:
   i) Polyaminoamide werden (a) zunächst mit einer Menge von 5 bis 30 Mol-% - bezogen auf den zur Quaternierung zur Verfügung stehenden Stickstoff - eines Quaternierungsmittels umgesetzt, und (b) anschließend die resultierenden quaternierten Polyaminoamide mit einer dem Gehalt an nicht quaterniertem Stickstoff entsprechenden molaren Menge Epichlorhydrin vernetzt, oder
   ii) Polyaminoamide werden (a) zunächst bei 10 bis 35°C mit einer Menge von 5 bis 40 Mol-% - bezogen auf den für die Vernetzung zur Verfügung stehenden Stickstoff - Epichlorhydrin umgesetzt, und (b) das Zwischenprodukt auf einen pH-Wert im Bereich von 8 bis 11 einstellt und bei einer Temperatur im Bereich von 20 bis 45°C mit einer weiteren Menge Epichlorhydrin vernetzt, so dass das molare Einsatzverhältnis in Summe 90 bis 125 Mol-% - bezogen auf den für die Vernetzung zur Verfügung stehenden Stickstoff - beträgt.
- Poly(meth)acrylate
   Unter dem Begriff Poly(meth)acrylate sind Homo- und Copolymerisationsprodukte der Acrylsäure, Methacrylsäure sowie gegebenenfalls deren Ester, speziell deren Ester mit niederen Alkoholen, wie z.B. Methanol, Ethanol, Isopropylalkohol, den isomeren Butanolen, Cyclohexanol und dergleichen zu verstehen, welche in an sich bekannter Weise, beispielsweise durch radikalische Polymerisation unter UV-Bestrahlung erhalten werden. Typischerweise liegt das mittlere Molekulargewicht der Polymeren zwischen 100 und 10.000, vorzugsweise bei 200 und 5.000 und insbesondere 400 bis 2.000 Dalton.
Üblicherweise werden die Bindemittel - bezogen auf Aktivsubstanz - in Mengen von 0,5 bis 15, vorzugsweise 1 bis 10 und insbesondere 1 bis 5 Gew.-% auf die Fasern aufgebracht.

### Einsatzmengen

Das Einsatzverhältnis zwischen Mikrokapseln und Bindemittel kann 90:10 bis 10:90, vorzugsweise 75:25 bis 25:75 und insbesondere 70:30 bis 30:70 Gewichtsteile betragen. Je nach Herstellverfahren und Einsatzverhältnis von Mikrokapseln und Bindemitteln können unterschiedliche Haftungstypen realisiert werden. Bei Einsatz einer geringeren Menge an Bindemittel (beispielsweise Gewichtsverhältnis Mikrokapseln : Bindemittel größer 50:50) haften die Mikrokapseln in einer Schicht des Bindemittels auf den Fasern, was dazu führt, dass es beim Tragen zu einem unmittelbaren Kontakt zwischen der Hüllmembran und der Hautoberfläche kommt. Es liegt auf der Hand, dass es bei diesem Haftungstyp ("Trägertyp") infolge mechanischer Reibung sehr rasch zu einer Freisetzung des Wirkstoffes kommt. Wird andererseits eine größere Menge Bindemittel eingesetzt (beispielsweise Gewichtsverhältnis Mikrokapseln : Bindemittel kleiner 50:50), so ist diese in der Regel ausreichend, um die Mikrokapseln nicht nur an die Fasern zu heften, sondern dabei einzuhüllen bzw. mit einem Überzug zu versehen ("Iglutyp"). Mikrokapseln von in solcher Weise ausgerüstete Fasern stehen beim Tragen nicht unmittelbar mit der Hautoberfläche in Verbindung, was dazu führt, dass sie zwar in geringeren Mengen abgegeben werden, aber auch über einen längeren Zeitraum wirksam sind.

### Gewerbliche Anwendbarkeit

Die Kombinationen aus mikroverkapselten Wirkstoffen und Bindemitteln dienen dazu, Fasern und alle Arten von textilen Flächengebilden, also sowohl Fertig- wie auch Halbfertigprodukte während des Herstellprozesses oder aber auch nach dessen Abschluss auszurüsten, um auf diese Weise den Schutz gegen Insektenstiche zu verbessern. Die Auswahl der Materialien, aus denen die Fasern oder die Textilien bestehen, ist dabei weitestgehend unkritisch. So kommen alle gängigen natürlichen und synthetischen Materialien sowie deren Gemische in Betracht, insbesondere aber Baumwolle, Polyamide, Polyester, Viskose, Polyamid/Lycra, Baumwolle/Lycra und Baumwolle/Polyester. Ebenso unkritisch ist die Auswahl der Textilien, wobei es natürlich nahe liegt solche Produkte auszurüsten, die in unmittelbarem Kontakt mit der Haut stehen oder allgemein vor Insektenstichen schützen sollen, also insbesondere Unterwäsche, Hemden, Hosen, T-Shirts, Uniformen, Moskito- und Tarnnetze.
Applikationsverfahren

Ein erstes geeignetes Verfahren zur Ausrüstung von Fasern oder textilen Flächengebilden besteht darin, dass man die Substrate mit wässrigen Kombinationen von mikroverkapselten Wirkstoffe und Bindemittel imprägniert. Die Imprägnierung der Fasern oder Textilien erfolgt im so genannten Ausziehverfahren. Das kann in einer handelsüblichen Waschmaschine oder in einem in der Textilindustrie üblichen Färbeapparat durchgeführt werden.

Alternativ betrifft ein anderer Gegenstand der Erfindung ein zweites Verfahren zur Ausrüstung von Fasern und textilen Flächengebilden, bei dem man die mikroverkapselten Wirkstoffe und die Bindemittel zwangsappliziert. Hierbei werden die auszurüstenden Stoffe durch ein die mikroverkapselten Wirkstoffe und die Bindemittel enthaltendes Tauchbad gezogen, wobei die Applikation dann über eine Presse unter Druck durchgeführt wird. Man spricht hierbei von einer Foulardapplikation.

Üblicherweise beträgt die Anwendungskonzentration der Wirkstoffe 0,5 bis 15 und vorzugsweise 1 bis 10 Gew.-% bezogen auf die Flotte bzw. das Tauchbad. Im Fall der Imprägnierung werden im Allgemeinen niedrigere Konzentrationen benötigt als bei der Zwangsapplikation um gleiche Beladungen der Fasern bzw. textilen Flächengebilden mit den Wirkstoffen zu erreichen.

Ein letzter Gegenstand der Erfindung betrifft schließlich die Verwendung von Gemischen, enthaltend
(a) mikroverkapselte Insektenabwehrstoffe und
(b) Bindemittel
   zur Ausrüstung von Fasern und textilen Flächengebilden, mit der Maßgabe, dass die Mikrokapseln einen mittleren Durchmessern im Bereich von 0,0001 bis 0,5 mm aufweisen, und aus einer Hüllmembran und einer die Wirkstoffe enthaltenden Matrix bestehen, wobei die Mikrokapseln dadurch erhältlich sind, dass man
(c1) aus anionischen Polymeren und Wirkstoffen eine Matrix zubereitet,
(c2) die Matrix in einer Ölphase dispergiert und
(c3) die dispergierte Matrix mit Melamin-Formaldehydharz verkapselt,
   wobei man als anionische Polymere ein Copolymer aus Vinylmethylether und Maleinsäureanhydrid einsetzt.

### Beispiele

### Herstellbeispiel H1 nicht erfindungsgemäß

In einem 500-ml-Dreihalskolben mit Rührer und Rückflusskühler wurden in der Siedehitze 3 g Agar-Agar in 200 ml Wasser gelöst. Anschließend wurde die Mischung innerhalb von etwa 30 min unter starkem Rühren zunächst mit einer homogenen Dispersionen von 10 g Glycerin und 2 g Talk in ad 100 g Wasser und dann mit einer Zubereitung von 25 g Chitosan (Hydagen® DCMF, 1 Gew.-%ig in Glycolsäure, Cognis, Düsseldorf/FRG), 5 g Permethrin 0,5 g Phenonip® (Konservierungsmittelmischung enthaltend Phenoxyethanol und Parabene) und 0,5 g Polysorbat-20 (Tween® 20, ICI) in ad 100 g Wasser versetzt. Die erhaltene Matrix wurde filtriert, auf 60 °C erwärmt und in eine 0,5 Gew.-%ige Natriumalginatlösung getropft. Nach dem Sieben wurde eine wässrige Zubereitung erhalten, die 8 Gew.-% Mikrokapseln mit einem mittleren Durchmesser von 1 mm enthielt. Zum Abschluss wurden die Mikrokapseln - bezogen auf den Feststoffgehalt - mit einem Polyurethanbindemittel im Gewichtsverhältnis 40:60 vermischt.

### Herstellbeispiel H2 nicht erfindungsgemäß

In einem 500-ml-Dreihalskolben mit Rührer und Rückflusskühler wurden in der Siedehitze 3 g Agar-Agar in 200 ml Wasser gelöst. Anschließend wurde die Mischung innerhalb von etwa 30 min unter starkem Rühren zunächst mit einer homogenen Dispersionen von 10 g Glycerin und 2 g Talk in ad 100 g Wasser und dann mit einer Zubereitung von 25 g Chitosan (Hydagen® DCMF, 1 Gew.-%ig in Glycolsäure, Cognis, Düsseldorf/FRG), 5 g DEET, 0,5 g Phenonip® (Konservierungsmittelmischung enthaltend Phenoxyethanol und Parabene) und 0,5 g Polysorbat-20 (Tween® 20, ICI) in ad 100 g Wasser versetzt. Die erhaltene Matrix wurde filtriert, auf 50 °C temperiert und unter starkem Rühren im 2,5fachen Volumen Paraffinöl, das zuvor auf 15 °C gekühlt worden war, dispergiert. Die Dispersion wurde anschließend mit einer wässrigen Lösung enthaltend 1 Gew.-% Natriumlaurylsulfat und 0,5 Gew.-% Natriumalginat und dann mehrfach mit einer 0,5 Gew.-%igen wässrigen Phenoniplösung gewaschen, wobei die Ölphase entfernt wurde. Nach dem Sieben wurde eine wässrige Zubereitung erhalten, die 8 Gew.-% Mikrokapseln mit einem mittleren Durchmesser von 1 mm enthielt. Zum Abschluss wurden die Mikrokapseln - bezogen auf den Feststoffgehalt - mit einem Polyurethanbindemittel im Gewichtsverhältnis 50:50 vermischt.

### Herstellbeispiel H3 nicht erfindungsgemäß

In einem 500-ml-Dreihalskolben mit Rührer und Rückflusskühler wurden in der Siedehitze 3 g Agar-Agar in 200 ml Wasser gelöst. Anschließend wurde die Mischung innerhalb von etwa 30 min unter starkem Rühren zunächst mit einer homogenen Dispersionen von 10 g Glycerin und 2 g Talk in ad 100 g Wasser und dann mit einer Zubereitung von 25 g Chitosan (Hydagen® DCMF, 1 Gew.-%ig in Glycolsäure, Cognis, Düsseldorf/FRG), 5 g Ethyl Butylacetylaminopropionat, 0,5 g Phenonip® (Konservierungsmittelmischung enthaltend Phenoxyethanol und Parabene) und 0,5 g Polysorbat-20 (Tween® 20, ICI) in ad 100 g Wasser versetzt. Die erhaltene Matrix wurde filtriert, auf 60 °C erwärmt und in eine 15 Gew.-%ige Lösung von Sodium Laureth Sulfate getropft. Nach dem Sieben wurde eine wässrige Zubereitung erhalten, die 9 Gew.-% Mikrokapseln mit einem mittleren Durchmesser von 1 mm enthielt. Zum Abschluss wurden die Mikrokapseln - bezogen auf den Feststoffgehalt - mit einem Polyurethanbindemittel einem Polyurethanbindemittel im Gewichtsverhältnis 50:50 vermischt.

### Herstellbeispiel H4 nicht erfindungsgemäß

In einem 500-ml-Dreihalskolben mit Rührer und Rückflusskühler wurden in der Siedehitze 3 g Agar-Agar in 200 ml Wasser gelöst. Anschließend wurde die Mischung innerhalb von etwa 30 min unter starkem Rühren zunächst mit einer homogenen Dispersionen von 10 g Glycerin und 2 g Talk in ad 100 g Wasser und dann mit einer Zubereitung von 25 g Chitosan (Hydagen® DCMF, 1 Gew.-%ig in Glycolsäure, Cognis, Düsseldorf/FRG), 5 g Hydroxyethyl Isobutyl Piperidine Carboxylate, 0,5 g Phenonip® (Konservierungsmittelmischung enthaltend Phenoxyethanol und Parabene) und 0,5 g Polysorbat-20 (Tween® 20, ICI) in ad 100 g Wasser versetzt. Die erhaltene Matrix wurde filtriert, auf 60 °C erwärmt und in eine 15 Gew.-%ige Lösung von Natriumpyrophosphat getropft. Nach dem Sieben wurde eine wässrige Zubereitung erhalten, die 8 Gew.-% Mikrokapseln mit einem mittleren Durchmesser von 1 mm enthielt. Zum Abschluss wurden die Mikrokapseln - bezogen auf den Feststoffgehalt - mit einem Polyurethanbindemittel im Gewichtsverhältnis 70:30 vermischt.

### Herstellbeispiel H5 nicht erfindungsgemäß

In einem 500-ml-Dreihalskolben mit Rührer und Rückflusskühler wurden in der Siedehitze 3 g Agar-Agar in 200 ml Wasser gelöst. Anschließend wurde die Mischung innerhalb von etwa 30 min unter starkem Rühren zunächst mit einer homogenen Dispersionen von 10g Glycerin und 2 g Talk in ad 100 g Wasser und dann mit einer Zubereitung von 25 g Chitosan (Hydagen® DCMF, 1 Gew.-%ig in Glycolsäure, Cognis, Düsseldorf/FRG), 5 g Deltamethrin, 0,5 g Phenonip® (Konservierungsmittelmischung enthaltend Phenoxyethanol und Parabene) und 0,5 g Polysorbat-20 (Tween® 20, ICI) in ad 100 g Wasser versetzt. Die so erhaltene Matrix wurde filtriert, auf 50 °C temperiert und unter starkem Rühren im 2,5fachen Volumen Paraffinöl, das zuvor auf 15 °C gekühlt worden war, dispergiert. Die Dispersion wurde anschließend mit einer 15 Gew.-%igen Natriumpyrophosphatlösung und dann mehrfach mit einer 0,5 Gew.-%igen wässrigen Phenoniplösung gewaschen, wobei die Ölphase entfernt wurde. Nach dem Sieben wurde eine wässrige Zubereitung erhalten, die 10 Gew.-% Mikrokapseln mit einem mittleren Durchmesser von 1 mm enthielt. Zum Abschluss wurden die Mikrokapseln - bezogen auf den Feststoffgehalt - mit einem Polyurethanbindemittel im Gewichtsverhältnis 70:30 vermischt.

### Herstellbeispiel H6 nicht erfindungsgemäß

In einem 500-ml-Dreihalskolben mit Rührer und Rückflusskühler wurden in der Siedehitze 3 g Gelatine in 200 ml Wasser gelöst. Anschließend wurde die Mischung innerhalb von etwa 30 min unter starkem Rühren zunächst mit einer homogenen Dispersionen von 10g Glycerin und 2 g Talk in ad 100 g Wasser und dann mit einer Zubereitung von 25 g Chitosan (Hydagen® DCMF, 1 Gew.-%ig in Glycolsäure, Henkel KGaA, Düsseldorf/FRG), 2,5 g Permethrin, 2,5 Deltamethrin, 0,5 g Phenonip® in ad 100 g Wasser versetzt. Die erhaltene Matrix wurde filtriert, auf 60 °C erwärmt und in eine 0,5 Gew.-%ige Lösung von Hydagen® SCD (succinyliertes Chitosan, Cognis) getropft. Nach dem Sieben wurde eine wässrige Zubereitung erhalten, die 8 Gew.-% Mikrokapseln mit einem mittleren Durchmesser von 1 mm enthielt. Zum Abschluss wurden die Mikrokapseln - bezogen auf den Feststoffgehalt - mit einem Polyurethanbindemittel im Gewichtsverhältnis 70:30 vermischt.

### Herstellbeispiel H7 nicht erfindungsgemäß

In einem 500-ml-Dreihalskolben mit Rührer und Rückflusskühler wurden in der Siedehitze 3 g Agar-Agar in 200 ml Wasser gelöst. Anschließend wurde die Mischung innerhalb von etwa 30 min unter starkem Rühren zunächst mit einer homogenen Dispersionen von 10 g Glycerin und 2 g Talk in ad 100 g Wasser und dann mit einer Zubereitung von 25 g Chitosan (Hydagen® DCMF, 1 Gew.-%ig in Glycolsäure, Cognis, Düsseldorf/FRG), 4 g Permethrin, 1 g Autan, 0,5 g Phenonip® (Konservierungsmittelmischung enthaltend Phenoxyethanol und Parabene) und 0,5 g Polysorbat-20 (Tween® 20, ICI) in ad 100 g Wasser versetzt. Die erhaltene Matrix wurde filtriert, auf 60 °C erwärmt und in eine 0,5 Gew.-%ige Natriumalginatlösung getropft. Zum Erhalt von Mikrokapseln gleichen Durchmessers wurden die Zubereitungen anschließend gesiebt. Zum Abschluss wurden die Mikrokapseln - bezogen auf den Feststoffgehalt - mit einem Polyurethanbindemittel im Gewichtsverhältnis 70:30 vermischt.

### Herstellbeispiel H8 nicht erfindungsgemäß

In einer Rührapparatur wurden 0,5 g Konservierungsmittel (Phenonip®) in 50 g einer 2 Gew.-%igen wässrigen Zubereitung von Carboxymethylcellulose gelöst und die Mischung auf pH = 3,5 eingestellt. Anschließend wurde unter starkem Rühren eine Mischung bestehend aus 1 g Deltamethrin und 0,5 g Sorbitanmonostearat+20EO (Eumulgin® SMS 20, Cognis Deutschland GmbH) hinzugegeben. Danach wurde unter weiterem Rühren eine solche Menge einer 1 Gew.-%igen Lösung von Chitosan in Glycolsäure (Hydagen® CMF Cognis Deutschland GmbH) hinzugegeben, dass sich eine Chitosankonzentration von 0,075 Gew.-% - bezogen auf die Zubereitung - einstellte. Anschließend wurde der pH-Wert durch Zugabe von Triethanolamin auf 5,5 angehoben und die entstandenen Mikrokapseln dekantiert. Zum Abschluss wurden die Mikrokapseln - bezogen auf den Feststoffgehalt - mit einem Polyurethanbindemittel im Gewichtsverhältnis 40:60 vermischt.

### Herstellbeispiel H9 nicht erfindungsgemäß

In einer Rührapparatur wurden 0,5 g Konservierungsmittel (Phenonip®) in 50 g einer 2 Gew.-%igen wässrigen Zubereitung von Polyacrylsäure (Pemulen® TR-2) gelöst, wobei sich ein pH-Wert von 3 einstellte. Anschließend wurde unter starkem Rühren eine Mischung bestehend aus 1 g DEET, 0,5 g Permethrin und 0,5 g Sorbitanmonolaurat+15EO (Eumulgin® SML 15, Cognis Deutschland GmbH) hinzugegeben. Danach wurde unter weiterem Rühren eine solche Menge einer 1 Gew.-%igen Lösung von Chitosan in Glycolsäure (Hydagen® CMF Cognis Deutschland GmbH) hinzugegeben, dass sich eine Chitosankonzentration von 0,01 Gew.-% - bezogen auf die Zubereitung - einstellte. Anschließend wurde der pH-Wert durch Zugabe von Triethanolamin auf 5,5 angehoben und die entstandenen Mikrokapseln dekantiert. Zum Abschluss wurden die Mikrokapseln - bezogen auf den Feststoffgehalt - mit einem Polyurethanbindemittel im Gewichtsverhältnis 40:60 vermischt.

### Herstellbeispiel H10 nicht erfindungsgemäß

In einer Rührapparatur wurden 0,5 g Konservierungsmittel (Phenonip®) in 50 g einer 2 Gew.-%igen wässrigen Zubereitung von Polyacrylsäure (Pemulen® TR-2) gelöst, wobei sich ein pH-Wert von 3 einstellte. Anschließend wurde unter starkem Rühren eine Mischung bestehend aus 1 g Deltamethrin und 0,5 g Coco Glucosides (Plantacare APG 1200, Cognis Deutschland GmbH) hinzu gegeben. Danach wurde unter weiterem Rühren eine solche Menge einer 1 Gew.-%igen Lösung von Chitosan in Glycolsäure (Hydagen® CMF Cognis Deutschland GmbH) hinzu gegeben, dass sich eine Chitosankonzentration von 0,01 Gew.-% - bezogen auf die Zubereitung - einstellte. Anschließend wurde der pH-Wert durch Zugabe von Triethanolamin auf 5,5 angehoben und die entstandenen Mikrokapseln dekantiert. Zum Abschluss wurden die Mikrokapseln - bezogen auf den Feststoffgehalt - mit einem Polyurethanbindemittel im Gewichtsverhältnis 40:60 vermischt.

### Effizienztests

Baumwollstrickware in Form von Hemdsärmeln wurde mit 6 Gew.-% Skintex® MR III (Basis Polyvinylmethylether/Maleinsäureanhydrid-Copolymer entsprechend DE 3512565 A1, aktiver Wirkstoff Permethrin) in Kombination mit 8% Cognis 3001-A sowie 0,3% Cognis 3002-A ausgerüstet. Die Muster wurden von jeweils sechs verschiedenen Probanden 8 Stunden täglich getragen und anschließend gewaschen. Alle zwei Stunden wurde eine ausgewählte Stelle des von dem Textilmuster bedeckten Armes für 2 Minuten einer Population von rund 100 bluthungrigen Gelbfiebermosquitos (*Aedes aegypti*) ausgesetzt. Die Zahl der Landungen ("*long touch downs* ") und Stiche wurde aufgezeichnet. Als akzeptables Maß an Schutz wurde eine Rate von weniger als drei Stichen pro 2 Minuten definiert. Wurde eine Testperson dreimal in zwei aufeinander folgenden Testreihen gestochen, wurde der Test mit *Aedes* abgebrochen und mit der weniger aggressiven Spezies *Culex quinquefasciatus* fortgesetzt. Die Tests wurden beendet, nachdem eine Testperson dreimal in zwei aufeinander folgenden Testreihen auch von Culex-Mosquitos gestochen wurde. Die Ergebnisse sind in Tabelle 1 (*A. ägypti*) und als Fortsetzung in Tabelle 2 (*C*. *Quinquefasciatus*) zusammengefasst:

**Tabelle 1**

| **Effizienztests mit *A. ägypti*** | | | |
|---|---|---|---|
| **Tragezeit [h]** | **Waschzyklen** | ***Aedes ägypti*** | |
| | | **Long touch downs** | **Stiche** |
| 0 | 0 | 8 | 2 |
| 2 | 0 | 12 | 3 |
| 4 | 0 | 18 | 2 |
| 6 | 0 | 19 | 1 |
| 8 | 0 | 10 | 2 |
| 8 | 1 | 18 | 1 |
| 10 | 1 | 18 | 2 |
| 12 | 1 | 16 | 2 |
| 14 | 1 | 18 | 2 |
| 16 | 1 | 8 | 1 |
| 16 | 2 | 22 | 2 |
| 18 | 2 | 20 | 3 |
| 20 | 2 | 24 | 2 |
| 22 | 2 | 21 | 2 |
| 24 | 2 | 16 | 2 |
| 26 | 2 | 26 | 3 |
| 26 | 3 | 25 | 3 |
| 28 | 3 | 15 | 3 |
| 30 | 3 | 18 | 2 |
| 32 | 3 | 23 | 3 |
| 34 | 3 | 14 | 3 |
| 34 | 4 | 29 | 3 |
| 36 | 4 | 21 | 3 |
| 38 | 4 | 25 | 3 |

**Tabelle 2**

| **Effizienztests mit *C. Quinquefasciatus*** | | | |
|---|---|---|---|
| **Tragezeit [h]** | **Waschzyklen** | ***Culex quinquefasciatus*** | |
| | | **Long touch downs** | **Stiche** |
| 40 | 4 | 32 | 1 |
| 42 | 4 | 29 | 1 |
| 44 | 4 | 21 | 1 |
| 44 | 5 | 27 | 2 |
| 46 | 5 | 32 | 1 |
| 48 | 5 | 63 | 2 |
| 50 | 5 | 53 | 2 |
| 52 | 5 | 45 | 2 |
| 52 | 6 | 35 | 3 |
| 54 | 6 | 50 | 2 |
| 56 | 6 | 48 | 3 |
| 58 | 6 | 48 | 3 |
| 60 | 6 | 43 | 3 |

Die Ergebnisse zeigen, dass die erfindungsgemäß ausgerüsteten Textilen auch unter "worst case" Bedingungen einen ausreichenden Schutz über einen Zeitraum von mindestens 5 Tagen gewähren.

### Waschpermanenz

Zur Überprüfung der Waschpermanenz wurden folgende Textilien
- Bluse (68 % Baumwolle, 32 % Polyester)
- Weiße Hose (99 % Baumwolle, 1 % Lycra)
- Gefärbte Shorts (97 % Baumwolle, 3 % Lycra)
- Blaue Shorts (98 % Baumwolle, 2 % Lycra)
- Gefärbte Capri Hose (98 % Baumwolle, 2 % Lycra)
wiederum mit jeweils 6 Gew.-% Skintex® MR III in Kombination mit 8% Cognis 3001-A sowie 0,3% Cognis 3002-A ausgerüstet und dann 25 Maschinenwäschen bei 60 °C unterworfen. Nach jedem Waschzyklus wurden die Textilien getrocknet und der Restgehalt an Permethrin bestimmt. Zum Vergleich wurden die gleichen Textilien mit einer Emulsion enthaltend unverkapseltes Permethrin imprägniert und den gleichen Versuchsbedingungen unterworfen. Die Mittelwerte der Ergebnisse für die verschiedenen Textilien sind in Tabelle 3 zusammengefasst.

**Tabelle 3**

| **Waschpermanenz** | | |
|---|---|---|
| **Waschzyklen** | **Restgehalt an Permethrin** | |
| | Verkapselt | Unverkapselt |
| 0 | 100 | 100 |
| 1 | 98 | 81 |
| 3 | 97 | 70 |
| 5 | 96 | 68 |
| 10 | 95 | 50 |
| 20 | 90 | 39 |
| 25 | 83 | 39 |

Die Ergebnisse zeigen, dass die erfindungsgemäß ausgerüsteten Textilien auch nach 25 Maschinenwäschen noch mehr als 80 % der ursprünglich aufgebrachten Permethrinmenge enthalten, während der Gehalt an unverkapseltem Permethrin unter den gleichen Bedingungen auf unter 40 % abgesunken ist.

## Patentansprüche

1. Fasern und textile Flächengebilde, **dadurch gekennzeichnet, dass** sie mit Mischungen aus
(a) mikroverkapselten Insektenabwehrstoffen, und
(b) Bindemitteln
ausgerüstet sind, mit der Maßgabe, dass sie mit Mikrokapseln mit mittleren Durchmessern im Bereich von 0,0001 bis 0,5 mm, bestehend aus einer Hüllmembran und einer die Wirkstoffe enthaltenden Matrix ausgerüstet sind, welche dadurch erhältlich sind, dass man
(c1) aus anionischen Polymeren und Wirkstoffen eine Matrix zubereitet,
(c2) die Matrix in einer Ölphase dispergiert und
(c3) die dispergierte Matrix mit Melamin-Formaldehydharz verkapselt, wobei man als anionische Polymere ein Copolymer aus Vinylmethylether und Maleinsäureanhydrid einsetzt.

2. Fasern und textile Flächengebilde nach Anspruch 1, **dadurch gekennzeichnet, dass** sie Insektenabwehrstoffe enthalte, die ausgewählt sind aus der Gruppe, die gebildet wird von Sesquiterpenen, Diethyltoluamid (DEET), Ethyl Butylacetylaminopropionat (IR3535), Hydroxyethyl Isobutyl Piperidine Carboxylate, Pyrethroiden sowie deren Gemischen.

3. Fasern und textile Flächengebilde nach Anspruch 2, **dadurch gekennzeichnet, dass** sie als Insektenabwehrstoffe Pyrethroide enthalten, die ausgewählt sind aus der Gruppe, die gebildet wird von 5-Benzyl-3-furylmethyl (+)-cis-(1R,3S,E) 2,2-dimethyl-3-(2-oxo-2,3,4,5-tetrahyfrothiophenylidenmethyl)cyclopropancarboxylat, 6-Chloropiperonyl 2,2-dimethyl-3-(2-methylpropenyl)cyclopropancarboxylat, Acrinathrin, Allethrin, Bifentrin, Bioresmethrin, Cismethrin, Cyclethrin, Cycloprothrin, Cyfluthrin, Cyhalothrin, Cypermethrin, Cyphenotrin, Deltamethrin, Dimethrin, Empenthrin, Esfenvalerat, Fenfluthrin, Fenpropathrin, Fenvalerat, Flucythrinat, Flumethrin, Fluvalinat, Furethrin, Halfenprox, Imiprothrin, Methyl cis/trans-3-(2,2-dichlorovinyl)-2,2-dimethylcyclopropan-1-carboxylat, Permethrin sowie deren Gemischen.

4. Fasern und textile Flächengebilde nach mindestens einem der Ansprüche 1 bis 3, **dadurch gekennzeichnet, dass** die Mikrokapseln einen Wirkstoffgehalt von 1 bis 30 Gew.-% aufweisen.

5. Fasern und textile Flächengebilde nach mindestens einem der Ansprüche 1 bis 4, **dadurch gekennzeichnet, dass** sie mit Bindemitteln ausgerüstet sind, die ausgewählt sind aus der Gruppe, die gebildet wird von Polyurethanen, Polyvinylacetaten, polymeren Melaminverbindungen, polymeren Glyoxalverbindungen, polymeren Siliconverbindungen, epichlorhydrinvernetzten Polyamidoaminen, Poly(meth)acrylaten und polymeren Fluorkohlenwasserstoffen sowie deren Gemischen.

6. Fasern und textile Flächengebilde nach mindestens einem der Ansprüche 1 bis 5, **dadurch gekennzeichnet, dass** sie mit Gemischen aus Mikrokapseln und Bindemitteln ausgerüstet sind, welche die beiden Komponenten im Gewichtsverhältnis 90 : 10 bis 10 : 90 enthalten.

7. Verwendung von Gemischen, enthaltend
(a) mikroverkapselte Insektenabwehrstoffe und
(b) Bindemittel
zur Ausrüstung von Fasern und textilen Flächengebilden, mit der Maßgabe, dass die Mikrokapseln einen mittleren Durchmessern im Bereich von 0,0001 bis 0,5 mm aufweisen, und aus einer Hüllmembran und einer die Wirkstoffe enthaltenden Matrix bestehen, wobei die Mikrokapseln dadurch erhältlich sind, dass man
(c1) aus anionischen Polymeren und Wirkstoffen eine Matrix zubereitet,
(c2) die Matrix in einer Ölphase dispergiert und
(c3) die dispergierte Matrix mit Melamin-Formaldehydharz verkapselt, wobei man als anionische Polymere ein Copolymer aus Vinylmethylether und Maleinsäureanhydrid einsetzt.

## Claims

1. Fibres and textile fabrics, **characterized in that** they are finished with mixtures of
(a) microencapsulated insect repellents and
(b) binders
with the proviso that they are finished with microcapsules with average diameters in the range of from 0.0001 to 0.5 mm comprising a shell membrane and a matrix containing the active compounds, which are obtainable by a procedure in which
(c1) a matrix is prepared from anionic polymers and active compounds,
(c2) the matrix is dispersed in an oily phase and
(c3) the dispersed matrix is encapsulated with melamine-formaldehyde resin, a copolymer of vinyl methyl ether and maleic anhydride being employed as the anionic polymer.

2. Fibres and textile fabrics according to claim 1, **characterized in that** they contain insect repellents which are selected from the group formed by sesquiterpenes, diethyltoluamide (DEET), ethyl butylacetylaminopropionate (IR3535), hydroxyethyl isobutyl piperidine carboxylate, pyrethroids and mixtures thereof.

3. Fibres and textile fabrics according to claim 2, **characterized in that** they contain as insect repellents pyrethroids which are selected from the group formed by 5-benzyl-3-furylmethyl (+)-cis-(1R,3S,E)-2,2-dimethyl-3-(2-oxo-2,3,4,5-tetrahydrothiophenylidenemethyl)cyclopropanecarboxylate, 6-chloropiperonyl 2,2-dimethyl-3-(2-methylpropenyl)cyclopropanecarboxylate, acrinathrin, allethrin, bifenthrin, bioresmethrin, cismethrin, cyclethrin, cycloprothrin, cyfluthrin, cyhalothrin, cypermethrin, cyphenothrin, deltamethrin, dimethrin, empenthrin, esfenvalerate, fenfluthrin, fenpropathrin, fenvalerate, flucythrinate, flumethrin, fluvalinate, furethrin, halfenprox, imiprothrin, methyl cis/trans-3-(2,2-dichlorovinyl) 2,2-dimethylcyclopropane-1-carboxylate, permethrin and mixtures thereof.

4. Fibres and textile fabrics according to at least one of claims 1 to 3, **characterized in that** the microcapsules have an active compound content of from 1 to 30 wt.%.

5. Fibres and textile fabrics according to at least one of claims 1 to 4, **characterized in that** they are finished with binders which are selected from the group formed by polyurethanes, polyvinyl acetates, polymeric melamine compounds, polymeric glyoxal compounds, polymeric silicone compounds, epichlorohydrin-crosslinked polyamidoamines, poly(meth)acrylates and polymeric fluorohydrocarbons and mixtures thereof.

6. Fibres and textile fabrics according to at least one of claims 1 to 5, **characterized in that** they are finished with mixtures of microcapsules and binders which comprise the two components in a weight ratio of 90 : 10 to 10 : 90.

7. Use of mixtures comprising
(a) microencapsulated insect repellents and
(b) binders
for finishing fibres and textile fabrics, with the proviso that the microcapsules have an average diameter in the range of from 0.0001 to 0.5 mm, and comprise a shell membrane and a matrix containing the active compounds, the microcapsules being obtainable by a procedure in which
(c1) a matrix is prepared from anionic polymers and active compounds,
(c2) the matrix is dispersed in an oily phase and
(c3) the dispersed matrix is encapsulated with melamine-formaldehyde resin, a copolymer of vinyl methyl ether and maleic anhydride being employed as the anionic polymer.

## Revendications

1. Fibres et structures textiles planes, **caractérisées en ce qu'**elles sont apprêtées avec des mélanges de
(a) répulsifs pour insectes micro-encapsulés, et de
(b) liants,
à la condition qu'elles soient apprêtées avec des microcapsules ayant des diamètres moyens dans la gamme de 0,0001 à 0,5 mm, constituées d'une membrane enveloppe et d'une matrice contenant les substances actives, lesquelles peuvent être obtenues en
(c1) préparant une matrice à partir de polymères anioniques et de substances actives,
(c2) dispersant la matrice dans une phase huileuse, et
(c3) encapsulant la matrice dispersée avec une résine de mélamine-formaldéhyde, un copolymère de vinylméthyléther et d'anhydride d'acide maléique étant utilisé en tant que polymère anionique.

2. Fibres et structures textiles planes selon la revendication 1, **caractérisées en ce qu'**elles contiennent des répulsifs pour insectes sélectionnés dans le groupe constitué par les sesquiterpènes, le diéthyltoluamide (DEET), l'éthyl-butylacétylaminopropionate (IR3535), l'hydroxyéthyl-isobutyl-pipéridine-carboxylate, les pyréthroïdes, et les mélanges de ceux-ci.

3. Fibres et structures textiles planes selon la revendication 2, **caractérisées en ce qu'**elles contiennent, à titre de répulsifs pour insectes, des pyréthroïdes sélectionnés dans le groupe constitué par le (+)-cis-(1R,3S,E) 2,2-diméthyl-3-(2-oxo-2,3,4,5-tétrahydrothiophenylideneméthyl)cyclopropane-carboxylate de 5-benzyl-3-furylméthyle, le 2,2-diméthyl-3-(2-méthylpropényl)cylopropane-carboxylate de 6-chloropipéronyle, l'acrinathrine, l'alléthrine, la bifenthrine, la bioresméthrine, la cisméthrine, la cycléthrine, la cycloprothrine, la cyfluthrine, la cyhalothrine, la cyperméthrine, la cyphénothrine, la deltaméthrine, la diméthrine, l'empenthrine, l'esfenvalérate, la fenfluthrine, la fenpropathrine, le fenvalérate, le flucythrinate, la fluméthrine, le fluvalinate, la furéthrine, l'halfenprox, l'imiprothrine, le cis/trans-3-(2,2-dichlorovinyl)-2,2-diméthylcyclopropane-1-carboxylate de méthyle, la perméthrine, et les mélanges de ceux-ci.

4. Fibres et structures textiles planes selon au moins une des revendications 1 à 3, **caractérisées en ce que** les microcapsules présentent une teneur en substances actives allant de 1 à 30 % en poids.

5. Fibres et structures textiles planes selon au moins une des revendications 1 à 4, **caractérisées en ce qu'**elles sont apprêtées avec des liants sélectionnés dans le groupe constitué par les polyuréthanes, les acétates de polyvinyle, les composés polymères de mélamine, les composés polymères de glyoxal, les composés polymères de silicone, les polyamidoamines réticulées avec une épichlorhydrine, les poly(méth)acrylates et les polymères hydrofluorocarbonés, et les mélanges de ceux-ci.

6. Fibres et structures textiles planes selon au moins une des revendications 1 à 5, **caractérisées en ce qu'**elles sont apprêtées avec des mélanges de micro-capsules et de liants contenant les deux composants en un rapport en poids de 90 : 10 à 10 : 90.

7. Utilisation de mélanges contenant
(a) des répulsifs pour insectes micro-encapsulés, et
(b) des liants,
pour l'apprêt de fibres et de surfaces textiles planes, à la condition que les microcapsules présentent un diamètre moyen dans la gamme de 0,0001 à 0,5 mm et qu'elles sont constituées d'une membrane enveloppe et d'une matrice contenant les substances actives, lesdites microcapsules pouvant être obtenues en
(c1) préparant une matrice à partir de polymères anioniques et de substances actives,
(c2) dispersant la matrice dans une phase huileuse, et
(c3) encapsulant la matrice dispersée avec une résine de mélamine-formaldéhyde, un copolymère de vinylméthyléther et d'anhydride d'acide maléique étant utilisé en tant que polymère anionique.
